# EUROPÄISCHE PATENTSCHRIFT

(11) **EP 3 610 574 B1**
(45) Veröffentlichungstag und Bekanntmachung des Hinweises auf die Patenterteilung: **19.05.2021**
(21) Anmeldenummer: 18716892.7
(22) Anmeldetag: 10.04.2018
(51) Int. Cl.: H04B 1/7143, H04L 1/00, H04L 1/20, H04L 5/00

(54) **SENDER UND EMPFÄNGER UND ENTSPRECHENDE VERFAHREN**
TRANSMITTER AND RECEIVER AND CORRESPONDING METHODS
ÉMETTEUR ET RÉCEPTEUR ET PROCÉDÉS CORRESPONDANTS

(30) Priorität: 11.04.2017 DE 102017206258
(43) Veröffentlichungstag der Anmeldung: 19.02.2020
(73) Patentinhaber: Fraunhofer-Gesellschaft zur Förderung der angewandten Forschung e.V., 80686 München (DE)
(72) Erfinder: KILIAN, Gerd, 91056 Erlangen (DE); BERNHARD, Josef, 92507 Nabburg (DE); STRAUSS, Wolfram, 90429 Nürnberg (DE); KNEISSL, Jakob, 90765 Fürth (DE); WECHSLER, Johannes, 91174 Spalt (DE)
(74) Vertreter: Schlenker, Julian
(86) Internationale Anmeldenummer: PCT/EP2018/025107
(87) Internationale Veröffentlichungsnummer: WO 2018/188813

(56) Entgegenhaltungen:
- EP-A1- 0 236 558
- EP-A1- 3 125 453
- DE-A1- 10 211 235
- DE-A1-102011 082 098

## Beschreibung

Die Erfindung bezieht sich auf einen Sender sowie auf einen Empfänger und entsprechende Verfahren zum Senden bzw. Empfangen von Daten.

In der DE 10 2011 082 098 A1 ist das sog. "Telegram Splitting" beschrieben, bei dem ein Datenpaket in mehrere Teilpakete (sog. Telegramm-Fragmente oder im Folgenden auch als Teil-Telegramme bezeichnet) unterteilt wird, die jeweils nur einen Bruchteil der gesamten jeweils zu übermittelnden Information übertragen und kürzer als ein einzelnes, die gesamte Information tragendes Telegramm sind. Ein solches Teilpaket oder Telegramm-Fragment wird als "Hop" bezeichnet. In einem Hop werden mehrere Informationssymbole übertragen. Die Hops werden auf einer Frequenz oder aber über mehrere Frequenzen verteilt (sog. "Frequency Hopping") gesendet. Zwischen den Hops gibt es Pausen, in denen nicht gesendet wird. Dabei werden in einer Variante die Teil-Telegramme unter Verwendung von Sprungmustern gesendet. Die Gruppe aller zusammengehöriger Teil-Telegramme sei im Folgenden auch unter dem Begriff Telegramm zusammengefasst.

Um ein Paket auf der Empfängerseite erfolgreich dekodieren zu können, ist es notwendig, dass das Sprungmuster, welches zum Versenden verwendet wurde, dem Empfänger bekannt ist. Um dies zu gewährleisten, sind für Telegram Splitting-Netzwerke Sprungmuster definiert, die allen Teilnehmern bekannt sind.

Bei Funkübertragungssystemen ist es ggf. von Vorteil, die gleiche Information bzw. die gleichen Daten mehrmals zu übertragen. Dies erhöht die Empfangswahrscheinlichkeit bei auftretender Störung, wenn die Systeme eine unkoordinierte Übertragung verwenden (z. B. ALOHA oder Slotted ALOHA). Dies ergibt sich aus der unkoordinierten Übertragung, da dort die Wahrscheinlichkeit, ungestört durch einen Sendekanal übertragen zu können, durch den Zufallszeitpunkt der Übertragung erhöht wird. Durch die Mehrfachübertragung ist es zudem möglich, mittels Diversität eine höhere Empfangsempfindlichkeit zu erreichen. Eine Methode hierfür ist z. B. Maximal Ratio Combining (MRC). Dies setzt voraus, dass der Empfänger vor dem Empfang zumindest die relative Position der Initialaussendung und der Wiederholungen zueinander kennt, damit er entsprechend die richtigen Symbole kombinieren kann.

Wird das Telegram Splitting für die Übertragung verwendet, so wird die Aussendung der Wiederholungen der jeweiligen Gruppe der Teil-Telegramme z. B. über einen festen Zeit- und/oder Frequenzversatz zwischen den Aussendungen vorgenommen.

So startet beispielsweise 10 s nach der ersten Aussendung des gesamten Telegramms die Aussendung einer ersten Wiederholung und 5 s nach der Aussendung der ersten Wiederholung startet die Aussendung der zweiten Wiederholung usw. Die Zeitabstände beziehen sich immer auf einen vorher definierten Referenzzeitpunkt (z. B. Anfang des ersten Teil-Telegramms). Dieses Vorgehen erlaubt es einem Empfänger, die klassische Kombination (z. B. MRC) auch in Telegram-Splitting Netzen durchzuführen.

Es kann jedoch der Fall auftreten, dass mehrere Sender gleichzeitig ihre Signale aussenden, sodass es bei dem Empfänger zu einer Überlagerung kommt. Die Signalüberlagerung ist auch davon abhängig, ob die Sender das gleiche Sprungmuster verwenden.

Die EP 0 236 558 A1 beschreibt ein Verfahren zur Übertragung digitaler Daten mittels Phasenmodulation (PSK) und "frequency hopping", bei welchem zur kohärenten Demodulation als Synchronisationsinformation die Symbole in unterschiedlichen Übertragungsabschnitten mehrfach übertragen werden, werden für jedes Symbol Gewichtungsfaktoren berechnet, welche die Existenz und den Einfluss eines Störers berücksichtigen. Die Symbolwerte werden mit diesen Gewichtungsfaktoren multipliziert, bevor die Werte korrespondierender Symbole linear kombiniert und zur Auswertung herangezogen werden.

Der Erfindung liegt daher die Aufgabe zugrunde, einen Sender und einen Empfänger vorzuschlagen, die für eine Datenkommunikation das Telegramm Splitting verwenden und bei denen die negativen Einflüsse der Aussendungen von Signalen durch einen störenden Sender oder durch mehrere störende Sender reduziert sind.

Die Erfindung löst die Aufgabe durch einen Sender.

Dabei sendet der Sender Daten in Form von einer Gruppe von mindestens zwei Teil-Telegrammen aus, die zusammen die Daten aufweisen und die kürzer sind als ein einzelnes die Daten aufweisendes Telegramm. Die Daten sind dabei vom Sender an einen Empfänger zu übertragen und sind beispielsweise Sensordaten. Die Gruppe der Teil-Telegramme lässt sich dabei auch als Telegramm bezeichnen. Der Sender sendet die Gruppe der Teil-Telegramme gemäß einem Sprungmuster aus, das sich auf Zeitpunkte und/oder Sendefrequenzen der Aussendung der einzelnen Teil-Telegramme bezieht. Zudem sendet der Sender die Gruppe der Teil-Telegramme mehrfach aus, d. h. die Gruppe der Teil-Telegramme wird mindestens zweimal ausgesendet. Diese Aussendungen lassen sich daher auch als Initialaussendung und Wiederholung(en) bezeichnen.

Der Sender wendet somit das Telegramm-Splitting an, bei dem Teil-Telegramme in Abhängigkeit von einem Sprungmuster versendet werden. Das Sprungmuster bezieht sich dabei auf die jeweils zu verwendeten Frequenzen und/oder die zeitlichen Abstände zwischen den Teil-Telegrammen bzw. auf die relativen oder absoluten Zeitpunkte der Versendung der Teil-Telegramme. Überdies versendet der Sender die Gruppe der Teil-Telegramme mehrfach, d. h. zumindest zweifach, wobei der Sender erfindungsgemäß für eine auf eine vorhergehende Aussendung folgende Aussendung der Gruppe der Teilpakete das für die vorhergehende Aussendung verwendete Sprungmuster in Zeit und/oder Frequenz zufällig versetzt.

In einer Ausgestaltung ist vorgesehen, dass der Sender für mindestens zwei Aussendungen der Gruppe der Teil-Telegramme jeweils unterschiedliche Sprungmuster verwendet. Unterscheiden sich die Sprungmuster, so unterscheiden sich auch die Frequenzen und/oder Zeitpositionen der einzelnen Teil-Telegramme zwischen den einzelnen Aussendungen voneinander. In einer Ausgestaltung unterscheiden sich insbesondere die Sprungmuster der ersten Aussendung von den folgenden Aussendungen.

Eine Ausgestaltung besteht darin, dass der Sender für eine Wahl der Sprungmuster auf einen Satz von Referenz-Sprungmustern zugreift. Der Satz von Referenz-Sprungmustern ist in einer Ausgestaltung insbesondere auch dem Empfänger bekannt, sodass der Empfänger das passende Sprungmuster verwendet oder zumindest nur diejenigen Sprungmuster ausprobiert, die in dem Satz von Referenz-Sprungmustern vorhanden sind.

In einer Ausgestaltung ist vorgesehen, dass der Sender für eine Aussendung der Gruppe der Teil-Telegramme ein Sprungmuster zufällig aus dem Satz von Referenz-Sprungmustern auswählt. In dieser Ausgestaltung stehen dem Sender mehrere unterschiedliche Sprungmuster zur Verfügung, aus denen er jeweils eines aussucht. Die Auswahl ist dabei zufällig, sodass auch für den Fall, dass zwei Sender auf den gleichen Satz von Referenz-Sprungmustern zugreifen und ggf. einmal das gleiche Sprungmuster verwenden, die Wahrscheinlichkeit dafür, dass erneut von beiden Sendern ein gleiches Sprungmuster ausgewählt wird, geringer ist.

Eine Ausgestaltung besteht darin, dass der Sender für eine Aussendung der Gruppe der Teil-Telegramme über ein Erzeugungsschema ein Sprungmuster erzeugt. In dieser Ausgestaltung verändert der Sender z. B. ein Sprungmuster, um daraus ein neues für eine weitere Aussendung zu erhalten. Alternativ generiert der Sender das Sprungmuster anhand festgelegter Parameter und/oder Variablen. Das Erzeugungsschema ist dabei vorzugsweise auch auf der Empfängerseite bekannt. Die Erzeugung des Sprungmusters erfolgt in einer Ausgestaltung insbesondere in Abhängigkeit von einem zufällig gewählten Parameter.

In einer Ausgestaltung ist vorgesehen, dass der Sender für eine auf eine vorhergehende Aussendung folgende Aussendung der Gruppe der Teil-Telegramme ein Sprungmuster durch einen Versatz der Zeitpunkte und/oder der Frequenzen des für die vorhergehende Aussendung verwendeten Sprungmusters erzeugt. In dieser Ausgestaltung besteht die Veränderung eines bestehenden Sprungmusters darin, dass wenigstens ein Sendezeitpunkt und/oder eine Sendefrequenz, wie sie für die Aussendung der einzelnen Teil-Telegramme zu verwenden sind, variiert wird. Bei einer Wiederholung wird somit wenigstens ein Teil-Telegramm in Bezug auf Frequenz und/oder Zeit anders als bei der vorhergehenden Aussendung gesendet. In einer Ausgestaltung werden alle Teil-Telegramme mit anderen Frequenzen bzw. mit Änderungen in Bezug auf die Zeit versendet. Die Veränderung des Sprungmusters erfolgt dabei in einer optionalen Ausgestaltung nur in diskreten Schritten, die sich auf Größen des Sprungmusters beziehen. Hat daher ein Teil-Telegramm eine gewisse Sendedauer, so erfolgt z. B. der zeitliche Versatz in einem Maß relativ zu dieser Sendedauer. Hat alternativ oder ergänzend ein Teil-Telegramm eine gewisse Bandbreite, so erfolgt z. B. der frequenzmäßige Versatz in einem Maß relativ zu dieser Bandbreite.

Der vorgenannte Versatz erfolgt dabei in einer Ausgestaltung zufällig.

In einer Ausgestaltung erzeugt der Sender für eine Aussendung der Gruppe der Teil-Telegramme ein Sprungmuster durch einen - insbesondere zufälligen und/oder vorzugsweise diskreten - Versatz der Zeitpunkte und/oder der Frequenzen eines zufällig aus dem Satz von Referenz-Sprungmustern gewählten Sprungmusters. In dieser Ausgestaltung wird zufällig ein Sprungmuster ausgewählt und anschließend im Hinblick auf Zeitpunkt oder Frequenzen verändert.

Gemäß einer Ausgestaltung ist daher vorgesehen, dass der Sender das Sprungmuster durch einen diskreten Versatz der Zeitpunkte relativ zu einer zeitlichen Länge eines Teil-Telegramms und/oder einen diskreten Versatz der Frequenzen relativ zu einer für die Aussendung verwendeten Kanalbandbreite erzeugt. Der vorzugsweise zufällige Versatz wird dabei für das aktuelle Sprungmuster bzw. das zufällig gewählte Sprungmuster vorgenommen.

Eine Ausgestaltung besteht darin, dass der Sender mindestens zwei Aussendungen der Gruppe der Teil-Telegramme ineinander verschachtelt vornimmt, indem der Sender während einer Pause zwischen zwei Teil-Telegrammen der einen Aussendung der zwei Aussendungen ein Teil-Telegramm der anderen Aussendung der zwei Aussendungen aussendet. In dieser Ausgestaltung sind die Aussendungen nicht getrennt voneinander, sondern die einzelnen Aussendungen sind teilweise ineinandergeschoben, sodass wenigstens ein Teil-Telegramm einer - zweiten - Aussendung in der Pause zwischen zwei Teil-Telegrammen einer anderen - ersten - Aussendung stattfindet.

Diese Ausgestaltung ist dabei ergänzend oder alternativ zur Verwendung von unterschiedlichen Sprungmustern bei den unterschiedlichen Aussendungen.

In einer Ausgestaltung ist vorgesehen, dass der Sender zufällig festlegt, innerhalb welcher Pause der einen Aussendung der Sender ein erstes Teil-Telegramm der Gruppe der Teil-Telegramme der anderen Aussendung aussendet. In dieser Ausgestaltung bestimmt der Sender den Zeitversatz zwischen den beiden Aussendungen. Der Sender legt dabei fest, innerhalb welcher Pause zwischen den Teil-Telegrammen einer vorangehenden Aussendung er ein erstes Teil-Telegramm der nachfolgenden Aussendung einfügt. Die Wahl der Pause hängt dabei auch vom verwendeten Sprungmuster ab, da eine Überlappung der verschachtelten Aussendungen mit sich selbst zu vermeiden ist.

Gemäß einer Ausgestaltung verwendet der Sender bei den mindestens zwei verschachtelten Aussendungen das gleiche Sprungmuster.

In einer alternativen Ausgestaltung verwendet der Sender bei einer der mindestens zwei verschachtelten Aussendungen das Sprungmuster der anderen der mindestens zwei verschachtelten Aussendungen, wobei der Sender dieses Sprungmuster mit einem - insbesondere zufälligen und/oder vorzugsweise diskreten - Versatz der Zeitpunkte und/oder der Frequenzen versieht.

Eine Ausgestaltung besteht darin, dass der Sender das Sprungmuster durch einen diskreten Versatz der Zeitpunkte relativ zu einer zeitlichen Länge eines Teil-Telegramms und/oder einen diskreten Versatz der Frequenzen relativ zu einer für die Aussendung verwendeten Kanalbandbreite erzeugt.

Eine Ausgestaltung besteht darin, dass der Sender in die ausgesendeten Teil-Telegrammen und/oder in Nutzdaten der Teil-Telegramme und/oder in aus den Nutzdaten der Teil-Telegramme ableitbaren Daten (z. B. einen Fehlerkorrekturwert, einen CRC oder einen Hash-Wert) hinein Daten bezüglich des verwendeten Sprungmusters und/oder bezüglich einer Änderung des verwendeten Sprungmusters gegenüber einem vorhergehenden oder einem nachfolgenden Sprungmustern und/oder bezüglich eines die Wahl und/oder Ausgestaltung des verwendeten Sprungmusters bestimmenden Parameters einfügt. Wenigstens ein Teil-Telegramm trägt daher Daten bzw. Informationen über das verwendete Sprungmuster. Der Parameter ist z. B. eine Zufallszahl, anhand der der Sender das Sprungmuster auswählt oder verändert. In einer alternativen Ausgestaltung ist der Parameter implizit in den übertragenen Daten vorhanden, sodass er nicht zusätzlich eingebracht werden muss. So wird beispielsweise ein Teil der Nutzerdaten oder die CRC bzw. ein Hashwert dafür verwendet, ein Sprungmuster abzuleiten, da diese Werte sich von Telegramm zu Telegramm ändern und demnach einen Zufallswert darstellen, der bei verschiedenen Aussendungen auch unterschiedlich ist. So ist beispielsweise ein Fehlerkorrekturwert der zufällige Parameter, über den der Sender ein aktuelles Sprungmuster erzeugt und/oder auswählt.

In einer Ausgestaltung, die eine der obigen Ausgestaltungen ergänzt oder alternativ dazu ist, ist vorgesehen, dass der Sender bei der mehrfachen (d. h. mindestens zweifachen) Aussendung der Gruppe der Teil-Telegramme jeweils unterschiedliche Sendefrequenzbänder verwendet. Dabei können die mehrfachen Aussendungen mit unterschiedlichen oder jeweils gleichen Sprungmustern erfolgen. Auch ist in einer Ausgestaltung vorgesehen, dass mindestens zwei Aussendungen ineinandergeschoben bzw. ineinander verschachtelt sind. Die Sendefrequenzbänder sind in einer Ausgestaltung teilweise überlappend. In einer alternativen Ausgestaltung sind die Sendefrequenzbänder frei von Überlappungen miteinander.

Weiterhin löst die Erfindung die Aufgabe durch ein Verfahren zum Aussenden von Daten.

Das Verfahren umfasst dabei mindestens die folgenden Schritte:
Daten werden in Form von einer Gruppe von mindestens zwei Teil-Telegrammen, die zusammen die Daten aufweisen und die kürzer sind als ein einzelnes die Daten aufweisendes Telegramm, ausgesendet. Dabei wird die Gruppe der Teil-Telegramme gemäß einem Sprungmuster ausgesendet, das sich auf Zeitpunkte und/oder Sendefrequenzen der Aussendung der einzelnen Teil-Telegramme bezieht. Dabei wird die Gruppe der Teil-Telegramme mehrfach - d. h. zumindest zweifach - ausgesendet.

Die obigen Ausgestaltungen des Senders lassen sich durch Schritte von entsprechenden Ausgestaltungen des Verfahrens realisieren, sodass hier auf eine Wiederholung der Ausführungen verzichtet sei.

Weiterhin löst die Erfindung die Aufgabe durch einen Empfänger.

Der Empfänger empfängt von einem Sender Teil-Telegramme, die zusammen Daten aufweisen und die kürzer sind als ein einzelnes die Daten aufweisendes Telegramm. Zudem identifiziert der Empfänger mindestens ein vom Sender beim Aussenden der Teil-Telegramme verwendetes Sprungmuster, das sich auf Zeitpunkte und/oder Sendefrequenzen der Aussendung der einzelnen Teil-Telegramme bezieht.

Gemäß einer Ausgestaltung ist vorgesehen, dass der Empfänger für die Identifizierung der Sprungmuster auf einen hinterlegten Satz von Referenz-Sprungmustern zugreift. Der Empfänger probiert somit beispielsweise die Referenz-Sprungmustern nacheinander aus, bis das passende gefunden ist.

Eine Ausgestaltung besteht darin, dass der Empfänger für die Identifizierung des - somit aktuellen - Sprungmusters von einem vorangehend identifizierten Sprungmuster ausgeht. Der Empfänger führt somit eine Art von Extrapolation aus, um aus einem identifizierten Sprungmuster auf das Sprungmuster einer aktuellen Aussendung zu schließen.

In einer Ausgestaltung ist vorgesehen, dass der Empfänger ausgehend von den empfangenen Teil-Telegrammen einer Aussendung einer Gruppe von Teil-Telegrammen mindestens eine Änderung eines Sprungmusters einer vorangehenden Aussendung der Gruppe von Teil-Telegrammen ermittelt. Der Empfänger ermittelt also Änderungen in Bezug auf Frequenz- und/oder Zeitversatz eines für eine Aussendung verwendeten Sprungmusters gegenüber einem vorher verwendeten Sprungmuster durch die Auswertung der Teil-Telegramme.

Gemäß einer Ausgestaltung ist vorgesehen, dass der Empfänger die empfangenen Teil-Telegramme aufteilt und dabei unterschiedlichen Aussendungen einer Gruppe von Teil-Telegrammen zuordnet. Erzeugt der Sender somit beispielweise die Aussendungen so, dass zwischen den Teil-Telegrammen einer vorangehenden Aussendung Teil-Telegramme einer nachfolgenden Aussendung eingefügt werden, so sortiert der Empfänger die Teil-Telegramme zu den einzelnen Aussendungen und verarbeitet sie insbesondere nicht alle gemeinsam. Mit anderen Worten: Der Sender verschachtelt mindestens zwei Aussendungen der Gruppen der Teil-Telegramme ineinander. Der Empfänger empfängt die Teil-Telegramme und ordnet die Teil-Telegramme den einzelnen Aussendungen zu, sodass der Empfänger beispielsweise trennt, ob ein Teil-Telegramm zu der ersten Aussendung oder zu einer Wiederholung gehört.

In einer Ausgestaltung kombiniert der Empfänger solche empfangenen Teil-Telegramme miteinander, die zu unterschiedlichen ineinander verschachtelten Aussendungen einer Gruppe von Teil-Telegrammen gehören. Der Empfänger kombiniert somit Teil-Telegramme, die z. B. zu einer ersten Aussendung (der sog. Initialaussendung) und einer zweiten Aussendung (also einer ersten Wiederholung) gehören. Dies geschieht beispielsweise mittels MRC (Maximum Ratio Combining).

Gemäß einer Ausgestaltung kombiniert der Empfänger solche empfangenen Teil-Telegramme miteinander, die zu unterschiedlichen Aussendungen einer Gruppe von Teil-Telegrammen gehören. Dies bezieht sich z. B. auf Aussendungen, deren Sprungmuster zueinander verschoben oder die unterschiedlich zueinander sind.

Gemäß einer Ausgestaltung sucht der Empfänger innerhalb der empfangenen Teil-Telegramme unter Verwendung eines Zeit- und/oder Frequenzversatzes mittels Hypothesentest nach dem Auftreten von unterschiedlichen Aussendungen einer Gruppe von Teil-Telegrammen. Der Empfänger sucht somit z. B. nach einer ersten Aussendung und nach einer zweiten Aussendung. Hierfür verwendet er unterschiedliche Werte für einen Zeit- und/oder Frequenzversatz und überprüft, welcher Versatz zu den empfangenen Teil-Telegrammen passt. Alternativ oder ergänzend findet eine Suche in den zur Verfügung stehenden Referenzsequenzen statt, bis das richtige gefunden ist.

Gemäß einer ergänzenden oder alternativen Ausgestaltung sucht der Empfänger innerhalb der empfangenen Teil-Telegramme unter Verwendung eines Satz von Referenzsequenzen mittels Hypothesentest nach dem Auftreten von unterschiedlichen Aussendungen einer Gruppe von Teil-Telegrammen. Der Satz von Referenzsequenzen ist beispielsweise in einem Datenspeicher des Empfängers hinterlegt.

Eine Ausgestaltung besteht darin, dass der Empfänger für die Identifizierung des Sprungmusters und/oder eines Zeitpunkts einer Initialaussendung und/oder eines Referenzpunktes für eine Aussendung der Teil-Telegramme auf Daten in den Teil-Telegrammen zugreift. Die Daten ergeben sich dabei in einer Ausgestaltung aus den vom jeweiligen Teil-Telegramm übertragenen Nutzdaten. Identifiziert wird somit je nach Ausgestaltung das aktuell verwendete Sprungmuster oder eine erste Aussendung der Gruppe der Teil-Telegramme (also die Initialaussendung) oder ein Referenzpunkt der Aussendungen bzw. Wiederholungen.

Weiterhin löst die Erfindung die Aufgabe durch ein Verfahren zum Empfangen von Daten.

Das Verfahren umfasst dabei mindestens die folgenden Schritte:
Es werden Teil-Telegramme empfangen, die zusammen die Daten aufweisen und die kürzer sind als ein einzelnes die Daten aufweisendes Telegramm. Zudem wird ein beim Aussenden der Teil-Telegramme verwendetes Sprungmuster identifiziert, das sich auf Zeitpunkte und/oder Sendefrequenzen der Aussendung der einzelnen Teil-Telegramme bezieht.

In einer Ausgestaltung gehören die Teil-Telegramme zu Gruppen von Teil-Telegrammen. Dabei wird in einer Ausgestaltung die Gruppe von Teil-Telegrammen mehrfach (d. h. zumindest zweifach) empfangen.

Die obigen Ausgestaltungen des Empfängers lassen sich durch Schritte von entsprechenden Ausgestaltungen des Verfahrens realisieren, sodass hier auf eine Wiederholung der Ausführungen verzichtet sei.

Weiterhin bezieht sich die Erfindung auf ein System zur Signalübertragung, das mindestens einen Sender nach einem der oben diskutierten Ausgestaltungen und mindestens einen Empfänger nach einem der obigen Ausgestaltungen aufweist.

Schließlich bezieht sich die Erfindung auf ein Computerprogramm mit einem Programmcode zur Durchführung des vorgenannten Verfahrens nach einer der Ausgestaltungen.

Im Einzelnen gibt es eine Vielzahl von Möglichkeiten, den Sender, den Empfänger, das System sowie die entsprechenden Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:
- Fig. 1: eine schematische Darstellung der wiederholten Aussendung von Teil-Telegrammen durch einen Sender,
- Fig. 2: eine schematische Darstellung eines Systems zur Datenübertragung,
- Fig. 3: eine schematische Darstellung der wiederholten Aussendung von Teil-Telegrammen durch zwei Sender mit jeweils gleichen Sprungmustern,
- Fig. 4: eine schematische Darstellung der wiederholten Aussendung von Teil-Telegrammen durch zwei Sender, wobei ein Sender das Sprungmuster für eine Wiederholung wechselt,
- Fig. 5: eine schematische Darstellung der wiederholten Aussendung von Teil-Telegrammen durch zwei Sender, wobei ein Sender das Sprungmuster für eine Wiederholung verändert und
- Fig. 6: eine schematische Darstellung der zweifachen Aussendung einer Gruppe von Teil-Telegrammen, wobei die Aussendungen ineinander verschachtelt sind.

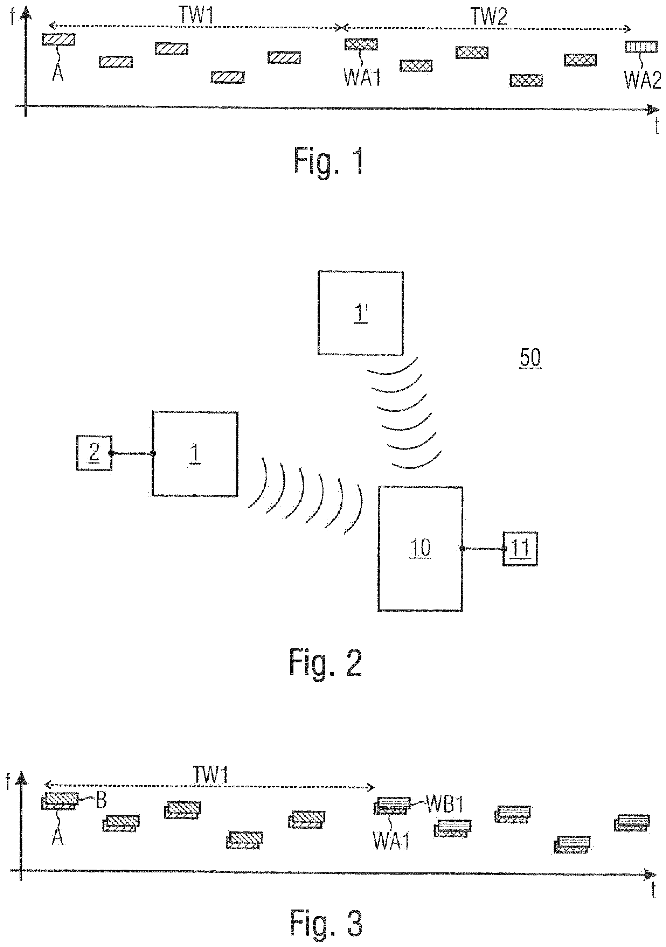

In der Fig. 1 ist dargestellt, dass eine Gruppe von - hier beispielhaft - fünf Teil-Telegrammen von einem Sender mit einem Sprungmuster ausgesendet werden. Die Gruppe der Teil-Telegramme seien dabei mit A bezeichnet. Auf der x-Achse ist die Zeit und auf der y-Achse die Frequenz aufgetragen.

Die Gruppe A wird hier zweimal wiederholt, wobei von der zweiten Wiederholung nur ein erstes Teil-Telegramm eingetragen ist. Die erste Wiederholung der Gruppe A wird mit WA1 und die zweite Wiederholung mit WA2 bezeichnet. Es liegen somit drei Aussendungen der Gruppe A vor. Die zeitliche Dauer einer Aussendung sei mit TW bezeichnet, wobei hier aufgrund des jeweils gleichen Sprungmusters die Dauern TW1 für das erste Aussenden und TW2 für das zweite Aussenden jeweils gleich sind.

Die Fig. 1 zeigt somit dem Fall, dass nur ein Sender Signale sendet.

Die Fig. 2 zeigt ein System 50, in welchem in der dargestellten Konstellation zwei Sender 1, 1' vorhanden sind, die jeweils das Telegramm Splitting verwenden und Signale aussenden, die von einem Empfänger 10 empfangen und verarbeitet werden.

Was passiert, wenn beide Sender 1, 1' das gleiche Sprungmuster verwenden, lässt sich in der Fig. 3 erkennen.

In der Fig. 3 sind die Gruppen der Teil-Telegramme, die die beiden Sender 1, 1' der Fig. 2 versenden, mit A und B bezeichnet. Da beide Sender 1, 1' das gleiche Sprungmuster verwenden, kommt es bei jeder Aussendung der jeweiligen Gruppe A, B zu einer Überlagerung der Teil-Telegramme. Damit dies in der Fig. 3 erkennbar ist, sind die Teil-Telegramme mit einem leichten Versatz gezeichnet. Die Überlagerung der Gruppen A, B und auch der wiederholten Gruppen WA1 und WB1 führt dazu, dass ein sicherer Empfang der Teil-Telegramme nicht mehr möglich ist.

Daher verfügt einer der Sender 1 der Ausgestaltung der Fig. 2 über einen Datenspeicher 2, in welchem ein Satz von Referenz-Sprungmustern hinterlegt ist. Dies erlaubt es dem Sender 1, für die einzelnen Aussendungen der Gruppe von Teil-Telegramme unterschiedliche Sprungmuster zu verwenden.

So verwendet der Sender 1 bei der Übertragung einer Wiederholung der Gruppe von Teil-Telegrammen anstelle des Sprungmusters der Initialaussendung (dies sei hier die erste Aussendung der Gruppe von Teil-Telegrammen) ein zufällig ausgewähltes Sprungmuster. Das Sprungmuster für die Wiederholung wird in einer alternativen Ausgestaltung generiert und im gezeigten Fall dem Satz der bekannten Sprungmuster entnommen.

Dem Empfänger 10 ist die entsprechende Generierungsvorschrift bzw. hier der Satz von Referenz-Sprungmustern bekannt. Dafür greift der Empfänger 10 im gezeigten Beispiel auf einen eigenen Datenspeicher 11 zu. Das verwendete Sprungmuster identifiziert der Empfänger 10 beispielsweise mittels Hypothesentest, indem unterschiedliche Sprungmuster ausprobiert werden.

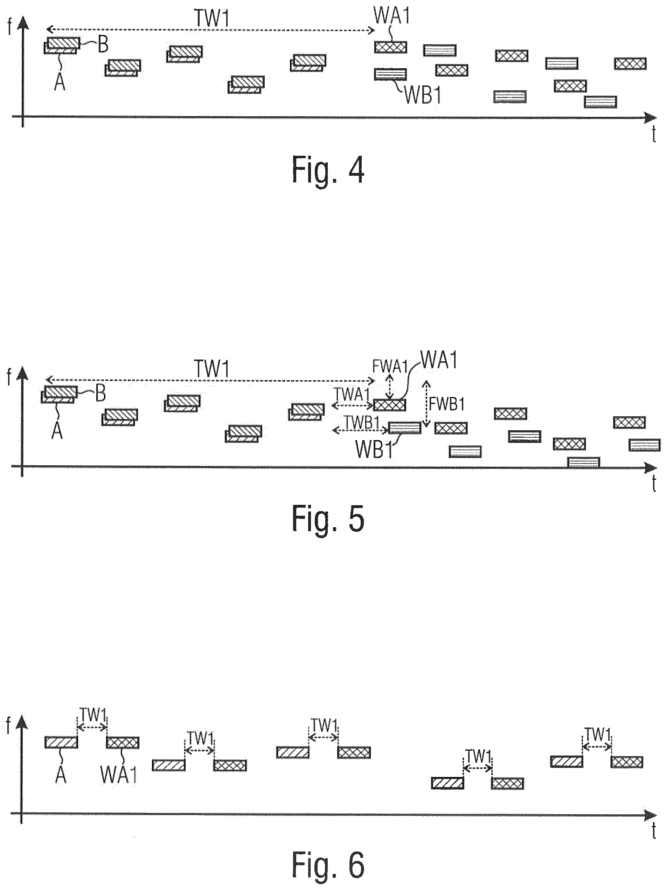

Die Fig. 4 zeigt den sich daraus ergebenden Fall, dass beide Gruppen von Teil-Telegrammen A und B bei der jeweils ersten Aussendung mit den gleichen Sprungmustern ausgesendet werden und dass bei der ersten Wiederholung der Gruppe B, die hier mit WB1 bezeichnet und somit die zweite Aussendung der Gruppe B ist, ein anderes Sprungmuster als bei der ersten Aussendung verwendet wird.

Es ist zu erkennen, dass es bei der jeweils ersten Wiederholung nicht mehr zu Überlappungen der Teil-Telegramme kommt.

Die Wiederholung des einen Senders wird durch die Zufallswahl des Sprungmusters nur mit geringer Wahrscheinlichkeit dem Sprungmuster entsprechen, das der andere Sender für die Aussendung der Wiederholung ausgewählt hat. Die Wahrscheinlichkeit, dass beide Sender wieder das gleiche Sprungmuster verwenden, sinkt mit der Anzahl der Wahlmöglichkeiten bzw. Variationsmöglichkeiten eines Sprungmusters. So verringert beispielsweise ein Satz mit einer größeren Anzahl an Sprungmustern die Überdeckungswahrscheinlichkeit der Wiederholungen.

Somit kann ein Telegramm (als Begriff für eine Gruppe von Teil-Telegrammen) durch eine Wiederholung, welches ohne Wiederholung durch die Überlappung mit einer anderen Übertragung mit identischem Sprungmuster nicht dekodierbar gewesen wäre, auch empfangen werden.

In der Fig. 5 ist dargestellt, dass bei der ersten Wiederholung das Sprungmuster der ersten Aussendung verändert wird. Hier wurden bei der zweiten Aussendung der Gruppe B (bezeichnet als erste Wiederholung WB1) die Lage in Bezug auf die Frequenz (FWB1) und in Bezug auf die Zeit (TWB1) geändert, so dass die Sprungmuster der jeweils ersten Wiederholungen (WA1 und WB1) gegeneinander verschoben sind und sich nicht mehr überlagern. Es wird also kein anderes Sprungmuster benutzt, sondern es wird das für die vorhergehende Aussendung verwendete Sprungmuster in Zeit und/oder Frequenz erfindungsgemäß zufällig versetzt, um die Wahrscheinlichkeit einer Kollision zu verringern.

Der zufällige Versatz ist idealerweise so gewählt, dass diskrete Stufen für Zeit- und/oder Frequenzversatz entstehen, welche bei unterschiedlicher Wahl einen Empfang eines identischen Sprungmusters mit einem anderem Versatz ermöglichen. So wird z. B. der Frequenzversatz in Stufen von Subübertragungskanälen oder der Zeitversatz in Teilen von Übertragungsdauern vorgenommen.

Die Fig. 6 zeigt eine Ausgestaltung, bei der zwei Aussendungen einer Gruppe von Teil-Telegrammen (A und WA1) ineinander verschachtelt sind. Das bedeutet, dass Teil-Telegramme einer Aussendung in den Pausen zwischen den Teil-Telegrammen einer anderen Aussendung ausgesendet werden.

Werden die Wiederholungen (also ab der zweiten Aussendung) nach dem Original-Telegramm bzw. nach der ersten Aussendung gesendet, so ist es bei variabler Telegrammlänge vorteilhaft, den Abstand der Wiederholungen so zu wählen, dass die maximal mögliche Länge des Original-Telegramms (also der zu sendenden Gruppe der Teil-Telegramme) zwischen der Aussendung des ersten Teil-Telegramms des Orginal-Telegramms (also der ersten Aussendung) und dem ersten Teil-Telegramm der ersten Wiederholung (also der zweiten Aussendung) Platz hat. Wird dies nicht gewährleistet, so könnten sich die Aussendung des Telegramms und seiner eigenen Wiederholung überlappen.

Andererseits ist eine zu lange Übertragungsdauer für den Empfänger von Nachteil, da durch Quarztoleranzen die Zeitpunkte der Teil-Telegramme in den Wiederholungen nicht mehr exakt dem erwarteten Zeitpunkt entsprechen. Hierdurch lässt sich das MRC nur noch durchführen, wenn sich der Zeit- und Frequenzfehler, welcher durch den Quarz hervorgerufen wird, sowohl in der ersten Aussendung als auch in den folgenden Aussendungen hinreichend genau bestimmen lässt. Dies ist im allgemeinen Fall aufgrund von Rauschen und Störungen nicht gegeben.

Ein Vorteil ist, dass die Gesamtübertragungsdauer und damit die Latenz reduziert wird. Durch die verschachtelte Übertragung der Initialaussendung und der Wiederholung(en) ist eine Kombination aus den Empfangsdaten der Wiederholung mit der Initialaussendung ohne getrennte Synchronisation der Zeit und der Frequenz möglich.

In einer Ausgestaltung ist die Zeit zwischen der Aussendung der Teil-Telegramme fest gegeben. Der zeitliche Versatz zwischen den Teil-Telegrammen der einzelnen Aussendungen ist hier jeweils gleich einem festen Wert TW1.

Alternativ oder ergänzend findet auch eine Verschiebung in Bezug auf die Frequenzen statt.

Das verschachtelte Aussenden kann dabei auch mit den anderen vorhergehenden Ausgestaltungen kombiniert werden.

Dabei gilt es darauf zu achten, dass die Pausen der Sprungmuster aufeinander abgestimmt sind, so dass die Sprungmuster sich über die gesamte Dauer des Aussendens nicht ineinanderschieben. Das bedeutet, dass die kumulierte Summe der Pausenzeiten der Sprungmuster, die ineinander verschachtelt werden, einen Grenzwert nicht überschreiten darf, da sonst die Aussendungen der Teil-Telegramme kollidieren können.

Wird beispielsweise ein asynchrones Netz betrieben, so erwartet ein Teilnehmer eine Antwort auf seine Nachricht in einem fest vorgegebenen Zeitschlitz und einer fest vorgegebenen Frequenz nach seiner eigenen Aussendung. In diesem Fall ist es notwendig, den exakten Zeitpunkt und die exakte Frequenz der ersten Aussendung der Gruppe der Teil-Telegramme zu wissen, wenn diese als Referenzzeitpunkt verwendet wird.

In einer Ausgestaltung wird der Zufallsparameter, aus dem der Versatz eines Sprungmusters relativ zu einem vorangehenden oder z. B. das Sprungmuster abgeleitet wird, in den Teil-Telegrammen explizit übertragen. In einer alternativen Ausgestaltung erfolgt dies über Daten, welche aus dem Telegramm abgeleitet werden (z. B. CRC, Hash, Teil des Telegramms, Teil der Nutzdaten).

Der Sendezeitpunkt des Original-Telegramms wird in einer Ausgestaltung durch Zurückrechnen über die empfangenen Wiederholungen und den Zufallsparameter bestimmt. Dies ist insbesondere in dem Fall vorteilhaft, in welchem die Initialaussendung aufgrund von Störungen nicht dekodiert werden konnte.

Alternativ oder ergänzend erfolgen die Aussendungen bzw. hier insbesondere die Wiederholungen in unterschiedlichen Frequenzbändern. Daher werden mehr Frequenzressourcen verwendet und die Frequenzdiversität wird ausgenutzt. Zudem findet eine Schonung des Bandes der Initialaussendung, also der ersten Aussendung statt.

Der Empfänger verfügt entsprechend über eine größere Bandbreite als bei den anderen Ausgestaltungen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sender (1),
wobei der Sender (1) Daten in Form von einer Gruppe von mindestens zwei Teilpaketen, die zusammen die Daten aufweisen und die kürzer sind als ein einzelnes die Daten aufweisendes Datenpaket, aussendet,
wobei der Sender (1) die Gruppe der Teilpakete gemäß einem Sprungmuster aussendet, das sich auf Zeitpunkte und/oder Sendefrequenzen der Aussendung der einzelnen Teilpakete bezieht,
wobei der Sender (1) die Gruppe der Teilpakete mehrfach und zumindest zweifach aussendet,
wobei der Sender (1) für eine auf eine vorhergehende Aussendung folgende Aussendung der Gruppe der Teilpakete das für die vorhergehende Aussendung verwendete Sprungmuster in Zeit und/oder Frequenz zufällig versetzt.

2. Sender (1) nach Anspruch 1,
wobei der Sender (1) für mindestens zwei Aussendungen der Gruppe der Teilpakete jeweils unterschiedliche Sprungmuster verwendet.

3. Sender (1) nach Anspruch 2,
wobei der Sender (1) für eine Wahl der Sprungmuster auf einen hinterlegten Satz von Referenz-Sprungmustern zugreift.

4. Sender (1) nach Anspruch 3,
wobei der Sender (1) für eine Aussendung der Gruppe der Teilpakete ein Sprungmuster zufällig aus dem Satz von Referenz-Sprungmustern auswählt.

5. Sender (1) nach einem der Ansprüche 2 bis 4,
wobei der Sender (1) für eine auf eine vorhergehende Aussendung folgende Aussendung der Gruppe der Teilpakete ein Sprungmuster durch einen - insbesondere zufälligen und/oder vorzugsweise diskreten - Versatz der Zeitpunkte und/oder der Frequenzen des für die vorhergehende Aussendung verwendeten Sprungmusters erzeugt.

6. Sender (1) nach einem der Ansprüche 2 bis 5,
wobei der Sender (1) für eine Aussendung der Gruppe der Teilpakete ein Sprungmuster durch einen - insbesondere zufälligen und/oder vorzugsweise diskreten - Versatz der Zeitpunkte und/oder der Frequenzen eines zufällig aus dem Satz von Referenz-Sprungmustern gewählten Sprungmusters erzeugt.

7. Sender (1) nach einem der Ansprüche 1 bis 6,
wobei der Sender (1) mindestens zwei Aussendungen der Gruppe der Teilpakete ineinander verschachtelt vornimmt, indem der Sender (1) während einer Pause zwischen zwei Teilpakete der einen Aussendung der zwei Aussendungen ein Teilpakete der anderen Aussendung der zwei Aussendungen aussendet.

8. Sender (1) nach Anspruch 7,
wobei der Sender (1) bei den mindestens zwei verschachtelten Aussendungen das gleiche Sprungmuster verwendet.

9. Sender (1) nach einem der Ansprüche 1 bis 8,
wobei der Sender (1) in die ausgesendeten Teilpakete und/oder in Nutzdaten der Teilpakete und/oder in aus den Nutzdaten der Teilpakete ableitbaren Daten (z. B. einen Fehlerkorrekturwert, einen CRC oder einen Hash-Wert) hinein Daten bezüglich des verwendeten Sprungmusters und/oder bezüglich einer Änderung des verwendeten Sprungmusters gegenüber einem vorhergehenden oder einem nachfolgenden Sprungmuster und/oder bezüglich eines die Wahl und/oder Ausgestaltung des verwendeten Sprungmusters bestimmenden Parameters einfügt.

10. Sender (1) nach einem der Ansprüche 1 bis 9,
wobei der Sender (1) bei der mehrfachen Aussendung der Gruppe der Teilpakete jeweils unterschiedliche Sendefrequenzbänder verwendet.

11. Verfahren zum Aussenden von Daten,
wobei Daten in Form von einer Gruppe von mindestens zwei Teilpaketen, die zusammen die Daten aufweisen und die kürzer sind als ein einzelnes die Daten aufweisendes Datenpaket, ausgesendet werden,
wobei die Gruppe der Teilpakete gemäß einem Sprungmuster ausgesendet wird, das sich auf Zeitpunkte und/oder Sendefrequenzen der Aussendung der einzelnen Teilpakete bezieht, und
wobei die Gruppe der Teilpakete mehrfach ausgesendet wird,
wobei für eine auf eine vorhergehende Aussendung folgende Aussendung der Gruppe der Teilpakete das für die vorhergehende Aussendung verwendete Sprungmuster in Zeit und/oder Frequenz zufällig versetzt wird.

12. Empfänger (10),
wobei der Empfänger (10) Teil-Telegramme, die zusammen Daten aufweisen und die kürzer sind als ein einzelnes die Daten aufweisendes Datenpaket, von einem Sender (1) empfängt, und
wobei der Empfänger (10) mindestens ein vom Sender (1) beim Aussenden der Teilpakete verwendetes Sprungmuster identifiziert, das sich auf Zeitpunkte und/oder Sendefrequenzen der Aussendung der einzelnen Teilpakete bezieht, wobei die Gruppe der Teilpakete von dem Sender (1) mehrfach und zumindest zweifach ausgesendet werden,
wobei für eine auf eine vorhergehende Aussendung folgende Aussendung der Gruppe der Teilpakete das für die vorhergehende Aussendung verwendete Sprungmuster in Zeit und/oder Frequenz zufällig versetzt ist.

13. Empfänger (10) nach Anspruch 12,
wobei der Empfänger (10) für die Identifizierung des Sprungmusters auf einen hinterlegten Satz von Referenz-Sprungmustern zugreift.

14. Empfänger (10) nach Anspruch 12 oder 13,
wobei der Empfänger (10) für die Identifizierung des Sprungmusters von einem vorangehend identifizierten Sprungmuster ausgeht.

15. Empfänger (10) nach einem der Ansprüche 12 bis 14,
wobei der Empfänger (10) ausgehend von den empfangenen Teilpaketen einer Aussendung einer Gruppe von Teilpaketen mindestens eine Änderung eines Sprungmusters einer vorangehenden Aussendung der Gruppe von Teilpaketen ermittelt.

16. Empfänger (10) nach einem der Ansprüche 12 bis 15,
wobei der Empfänger (10) die empfangenen Teilpakete aufteilt und dabei unterschiedlichen Aussendungen einer Gruppe von Teilpaketen zuordnet.

17. Empfänger (10) nach einem der Ansprüche 12 bis 15,
wobei der Empfänger (10) solche empfangenen Teilpakete miteinander kombiniert, die zu unterschiedlichen ineinander verschachtelten Aussendungen einer Gruppe von Teilpaketen gehören.

18. Empfänger (10) nach einem der Ansprüche 12 bis 17,
wobei der Empfänger (10) solche empfangenen Teilpakete miteinander kombiniert, die zu unterschiedlichen Aussendungen einer Gruppe von Teilpaketen gehören.

19. Empfänger (10) nach einem der Ansprüche 12 bis 18,
wobei der Empfänger (10) innerhalb der empfangenen Teilpakete unter Verwendung eines Zeit- und/oder Frequenzversatzes mittels Hypothesentest nach dem Auftreten von unterschiedlichen Aussendungen einer Gruppe von Teilpaketen sucht.

20. Empfänger (10) nach einem der Ansprüche 12 bis 19,
wobei der Empfänger (10) innerhalb der empfangenen Teilpakete unter Verwendung eines Satz von Referenzsequenzen mittels Hypothesentest nach dem Auftreten von unterschiedlichen Aussendungen einer Gruppe von Teilpaketen sucht.

21. Empfänger (10) nach einem der Ansprüche 12 bis 20,
wobei der Empfänger (10) für die Identifizierung des Sprungmusters und/oder eines Zeitpunkts einer Initialaussendung und/oder eines Referenzpunktes für eine Aussendung der Teilpakete auf Daten in den Teilpaketen zugreift.

22. Verfahren zum Empfangen von Daten,
wobei Teilpakete empfangen werden, die zusammen die Daten aufweisen und die kürzer sind als ein einzelnes die Daten aufweisendes Datenpaket, und wobei ein beim Aussenden der Teilpakete verwendetes Sprungmuster identifiziert wird, das sich auf Zeitpunkte und Sendefrequenzen bei der Aussendung der einzelnen Teilpakete bezieht,
wobei die Gruppe der Teilpakete mehrfach und zumindest zwei-fach ausgesendet werden,
wobei für eine auf eine vorhergehende Aussendung folgende Aussendung der Gruppe der Teilpakete das für die vorhergehende Aussendung verwendete Sprungmuster in Zeit und/oder Frequenz zufällig versetzt ist.

23. System (50) zur Signalübertragung,
wobei das System (50) mindestens einen Sender (1) nach einem der Ansprüche 1 bis 10 und mindestens einen Empfänger (10) nach einem der Ansprüche 12 bis 21 aufweist.

24. Computerprogramm umfassend Befehle, die bei der Ausführung des Computerprogramms durch einen Computer diesen veranlassen, das Verfahren nach einem der Ansprüche 11 oder 22 auszuführen.

## Claims

1. Transmitter (1),
wherein the transmitter (1) emits data in the form of a group of at least two partial packets that together comprise the data and that are shorter than an individual data packet comprising the data,
wherein the transmitter (1) emits the group of the partial packets according to a hopping pattern that refers to times and/or transmission frequencies of the emission of the individual partial packets,
wherein the transmitter (1) emits the group of the partial packets several times and at least twice,
wherein, for an emission of the group of the partial packets following a preceding emission, the transmitter (1) randomly offsets the hopping pattern used for the preceding emission in time and/or frequency.

2. Transmitter (1) according to claim 1,
wherein the transmitter (1) uses different hopping patterns each for at least two emissions of the group of the partial packets.

3. Transmitter (1) according to claim 2,
wherein, for a selection of the hopping patterns, the transmitter (1) accesses a stored set of reference hopping patterns.

4. Transmitter (1) according to claim 3,
wherein, for an emission of the group of the partial packets, the transmitter (1) randomly selects a hopping pattern from the set of reference hopping patterns.

5. Transmitter (1) according to any one of claims 2 to 4,
wherein, for an emission of the group of the partial packets following a preceding emission, the transmitter (1) generates a hopping pattern by means of a - in particular random and/or preferably discrete - offset of the times and/or the frequencies of the hopping pattern used for the preceding emission.

6. Transmitter (1) according to any one of claims 2 to 5,
wherein, for an emission of the group of the partial packets, the transmitter (1) generates a hopping pattern by means of a - in particular random and/or preferably discrete - offset of the times and/or the frequencies of a hopping pattern randomly selected from the set of reference hopping patterns.

7. Transmitter (1) according to any one of claims 1 to 6,
wherein the transmitter (1) performs at least two emissions of the group of the partial packets in an interleaved manner, which is done by the transmitter (1) emitting, during a pause between two partial packets of the one emission of the two emissions, a partial packet of the other emission of the two emissions.

8. Transmitter (1) according to claim 7,
wherein the transmitter (1) uses the same hopping pattern in the at least two interleaved emissions.

9. Transmitter (1) according to any one of claims 1 to 8,
wherein the transmitter (1) inserts, into the transmitted partial packets and/or into payload data of the partial packets and/or into data that may be derived from the payload data of the partial packets (e.g. an error correction value, a CRC or a hash value), data with respect to the hopping pattern used and/or with respect to a change of the hopping pattern used in contrast to a preceding or a following hopping pattern and/or with respect to a parameter determining the selection and/or design of the hopping pattern used.

10. Transmitter (1) according to any one of claims 1 to 9,
wherein, in the multiple emission of the group of the partial packets, the transmitter (1) uses different transmission frequency bands, respectively.

11. Method for emitting data,
wherein data is emitted in the form of a group of at least two partial packets that together comprise the data and that are shorter than an individual data packet comprising the data,
wherein the group of the partial packets is emitted according to a hopping pattern that refers to times and/or transmission frequencies of the emission of the individual partial packets, and
wherein the group of the partial packets is emitted several times,
wherein, for an emission of the group of the partial packets following a preceding emission, the hopping pattern used for the preceding emission is randomly offset in time and/or frequency.

12. Receiver (10),
wherein the receiver (10) receives from a transmitter (1) partial telegrams that together comprise data and that are shorter than an individual data packet comprising the data, and
wherein the receiver (10) identifies at least one hopping pattern used by the transmitter (1) when emitting the partial packets, the hopping pattern referring to times and/or transmission frequencies of the emission of the individual partial packets,
wherein the group of partial packets is emitted by the transmitter (1) multiple times and at least twice,
wherein, for an emission of the group of the partial packets following a preceding emission, the hopping pattern used for the preceding emission is randomly offset in time and/or frequency.

13. Receiver (10) according to claim 12,
wherein, for the identification of the hopping pattern, the receiver (10) accesses a stored set of reference hopping patterns.

14. Receiver (10) according to claim 12 or 13,
wherein the receiver (10) takes a previously identified hopping pattern as the starting point for the identification of the hopping pattern.

15. Receiver (10) according to any one of claims 12 to 14,
wherein the receiver (10) determines, starting from the received partial packets of an emission of a group of partial packets, at least one change of a hopping pattern of a preceding emission of the group of partial packets.

16. Receiver (10) according to any one of claims 12 to 15,
wherein the receiver (10) divides the received partial packets and assigns them to different emissions of a group of partial packets.

17. Receiver (10) according to any one of claims 12 to 15,
wherein the receiver (10) combines such received partial packets that belong to different interleaved emissions of a group of partial packets.

18. Receiver (10) according to any one of claims 12 to 17,
wherein the receiver (10) combines such received partial packets that belong to different emissions of a group of partial packets.

19. Receiver (10) according to any one of claims 12 to 18,
wherein the receiver (10) searches, within the received partial packets, for the occurrence of different emissions of a group of partial packets by means of a hypothesis test using a temporal offset and/or frequency offset.

20. Receiver (10) according to any one of claims 12 to 19,
wherein the receiver (10) searches, within the received partial packets, for the occurrence of different emissions of a group of partial packets by means of a hypothesis test using a set of reference sequences.

21. Receiver (10) according to any one of claims 12 to 20,
wherein the receiver (10) accesses data in the partial packets for the identification of the hopping pattern and/or a time of an initial emission and/or a reference point for an emission of the partial packets.

22. Method for receiving data,
wherein partial packets are received that together comprise the data and that are shorter than an individual data packet comprising the data, and
wherein a hopping pattern used when emitting the partial packets is identified, the hopping pattern referring to times and transmission frequencies in the emission of the individual partial packets,
wherein the group of partial packets is emitted multiple times and at least twice,
wherein, for an emission of the group of the partial packets following a preceding emission, the hopping pattern used for the preceding emission is randomly offset in time and/or frequency.

23. System (50) for signal transmission,
wherein the system (50) comprises at least one transmitter (1) according to any one of claims 1 to 10 and at least one receiver (10) according to any one of claims 12 to 21.

24. Computer program comprising instructions which, when the computer program is executed by a computer, cause the same to perform the method according to any one of claims 11 or 22.

## Revendications

1. Emetteur (1),
dans lequel l'émetteur (1) transmet des données sous forme d'un groupe d'au moins deux paquets partiels qui contiennent ensemble les données et qui sont plus courts qu'un seul paquet de données présentant les données,
dans lequel l'émetteur (1) transmet le groupe de paquets partiels selon un modèle de saut qui se rapporte aux moments et/ou aux fréquences de transmission de la transmission des paquets partiels individuels,
dans lequel l'émetteur (1) transmet le groupe de paquets partiels plusieurs fois et au moins deux fois,
dans lequel l'émetteur (1) décale de manière aléatoire, pour une transmission du groupe de paquets partiels suivant une transmission précédente, le modèle de saut utilisé pour la transmission précédente dans le temps et/ou en fréquence.

2. Emetteur (1) selon la revendication 1,
dans lequel l'émetteur (1) utilise, pour au moins deux transmissions du groupe de paquets partiels, des modèles de saut chaque fois différents.

3. Emetteur (1) selon la revendication 2,
dans lequel l'émetteur (1) accède, pour une sélection des modèles de saut, à un ensemble mémorisé de modèles de saut de référence.

4. Emetteur (1) selon la revendication 3,
dans lequel l'émetteur (1) sélectionne de manière aléatoire, pour une transmission du groupe de paquets partiels, un modèle de saut parmi l'ensemble de modèles de saut de référence.

5. Emetteur (1) selon l'une des revendications 2 à 4,
dans lequel l'émetteur (1) génère, pour une transmission du groupe de paquets partiels suivant une transmission précédente, un modèle de saut par un décalage - en particulier aléatoire et/ou de préférence discret - des moments et/ou des fréquences du modèle de saut utilisé pour la transmission précédente.

6. Emetteur (1) selon l'une des revendications 2 à 5,
dans lequel l'émetteur (1) génère, pour une transmission du groupe de paquets partiels, un modèle de saut par un décalage - en particulier aléatoire et/ou de préférence discret - des moments et/ou des fréquences d'un modèle de saut choisi aléatoirement parmi l'ensemble de modèles de saut de référence.

7. Emetteur (1) selon l'une des revendications 1 à 6,
dans lequel l'émetteur (1) procède à au moins deux transmissions du groupe de paquets partiels de manière entrelacée entre elles en ce que l'émetteur (1) transmet, pendant une pause entre deux paquets partiels de l'une transmission parmi les deux transmissions, un paquet partiel de l'autre transmission parmi les deux transmissions.

8. Emetteur (1) selon la revendication 7,
dans lequel l'émetteur (1) utilise, dans les au moins deux transmissions entrelacées, le même modèle de saut.

9. Emetteur (1) selon l'une des revendications 1 à 8,
dans lequel l'émetteur (1) introduit dans les paquets partiels transmis et/ou dans les données utiles des paquets partiels et/ou dans les données qui peuvent être dérivées des données utiles des paquets partiels (par exemple, une valeur de correction d'erreur, un CRC ou une valeur de hachage) des données relatives au modèle de saut utilisé et/ou relatives à un changement du modèle de saut utilisé par rapport à un modèle de saut précédent ou suivant et/ou relatives à un paramètre qui détermine le choix et/ou la configuration du modèle de saut utilisé.

10. Emetteur (1) selon l'une des revendications 1 à 9,
dans lequel l'émetteur (1) utilise, lors de la transmission à plusieurs reprises du groupe de paquets partiels, chaque fois des bandes de fréquences de transmission différentes.

11. Procédé de transmission de données,
dans lequel les données sont transmises sous forme d'un groupe d'au moins deux paquets partiels qui présentent ensemble les données et qui sont plus courts qu'un seul paquet de données présentant les données,
dans lequel le groupe de paquets partiels est transmis selon un modèle de saut qui se rapporte aux moments et/ou aux fréquences de transmission de la transmission des paquets partiels individuels, et
dans lequel le groupe de paquets partiels est transmis plusieurs fois,
dans lequel, pour une transmission du groupe de paquets partiels suivant une transmission précédente, le modèle de saut utilisé pour la transmission précédente est décalé de manière aléatoire dans le temps et/ou en fréquence.

12. Récepteur (10),
dans lequel le récepteur (10) reçoit d'un émetteur (1) des télégrammes partiels qui présentent ensemble des données et qui sont plus courts qu'un seul paquet de données présentant les données, et
dans lequel le récepteur (10) identifie au moins un modèle de saut utilisé par l'émetteur (1) lors de la transmission des paquets partiels qui se rapporte aux moments et/ou aux fréquences de transmission de la transmission des paquets partiels individuels, dans lequel le groupe de paquets partiels est transmis plusieurs fois et au moins deux fois par l'émetteur (1),
dans lequel, pour une transmission du groupe de paquets partiels suivant une transmission précédente, le modèle de saut utilisé pour la transmission précédente est décalé de manière aléatoire dans le temps et/ou en fréquence.

13. Récepteur (10) selon la revendication 12,
dans lequel le récepteur (10) accède, pour l'identification du modèle de saut, à un ensemble mémorisé de modèles de saut de référence.

14. Récepteur (10) selon la revendication 12 ou 13,
dans lequel le récepteur (10) part, pour l'identification du modèle de saut, d'un modèle de saut identifié auparavant.

15. Récepteur (10) selon l'une des revendications 12 à 14,
dans lequel le récepteur (10) détermine, en partant des paquets partiels reçus d'une transmission d'un groupe de paquets partiels, au moins un changement d'un modèle de saut d'une transmission précédente du groupe de paquets partiels.

16. Récepteur (10) selon l'une des revendications 12 à 15,
dans lequel le récepteur (10) divise les paquets partiels et les associe à différentes transmissions d'un groupe de paquets partiels.

17. Récepteur (10) selon l'une des revendications 12 à 15,
dans lequel le récepteur (10) combine entre eux les paquets partiels reçus qui appartiennent à différentes transmissions entrelacées entre elles d'un groupe de paquets partiels.

18. Récepteur (10) selon l'une des revendications 12 à 17,
dans lequel le récepteur (10) combine entre eux les paquets partiels reçus qui appartiennent à différentes transmissions d'un groupe de paquets partiels.

19. Récepteur (10) selon l'une des revendications 12 à 18,
dans lequel le récepteur (10) recherche dans les paquets partiels reçus, à l'aide d'un décalage dans le temps et/ou en fréquence au moyen d'un test d'hypothèse, l'occurrence de différentes transmissions d'un groupe de paquets partiels.

20. Récepteur (10) selon l'une des revendications 12 à 19,
dans lequel le récepteur (10) recherche dans les paquets partiels reçus, à l'aide d'un ensemble de séquences de référence au moyen d'un test d'hypothèse, l'occurrence de différentes transmissions d'un groupe de paquets partiels.

21. Récepteur (10) selon l'une des revendications 12 à 20,
dans lequel le récepteur (10) accède, pour l'identification du modèle de saut et/ou d'un moment d'une transmission initiale et/ou d'un point de référence pour une transmission des paquets partiels, à des données dans les paquets partiels.

22. Procédé de réception de données,
dans lequel sont reçus des paquets partiels qui présentent ensemble les données et qui sont plus courts qu'un seul paquet de données présentant les données, et
dans lequel est identifié un modèle de saut utilisé lors de la transmission des paquets partiels qui se rapporte aux moments et aux fréquences de transmission lors de la transmission des paquets partiels individuels,
dans lequel le groupe des paquets partiels est transmis plusieurs fois et au moins deux fois,
dans lequel, pour une transmission du groupe de paquets partiels suivant une transmission précédente, le modèle de saut utilisé pour la transmission précédente est décalé aléatoirement dans le temps et/ou en fréquence.

23. Système (50) pour la transmission de signaux,
dans lequel le système (50) présente au moins un émetteur (1) selon l'une des revendications 1 à 10 et au moins un récepteur (10) selon l'une des revendications 12 à 21.

24. Programme d'ordinateur comportant des instructions qui, lorsque le programme d'ordinateur est exécuté par un ordinateur, amènent ce dernier à réaliser le procédé selon l'une des revendications 11 ou 22.
